# EUROPEAN PATENT SPECIFICATION

(11) **EP 1 745 091 B1**
(45) Date of publication and mention of the grant of the patent: **11.04.2012**
(21) Application number: 05732848.6
(22) Date of filing: 12.04.2005
(51) Int. Cl.: C08J 9/00

(54) **PROCESS FOR THE PREPARATION OF A COMPOSITION OF AN EXPANDABLE STYRENE POLYMER IN THE FORM OF BEADS**
VERFAHREN ZUR HERSTELLUNG EINER ZUSAMMENSETZUNG EINES EXPANDIERBAREN STYROLPOLYMERS IN FORM VON PERLEN
PROCEDE DE PREPARATION D'UNE COMPOSITION DE POLYMERE STYRENE EXPANSIBLE SOUS FORME DE PERLES

(30) Priority: 28.04.2004 FR 0404511
(43) Date of publication of application: 24.01.2007
(73) Proprietor: Ineos Commercial Services UK Limited, Hampshire SO43 7FG (GB)
(72) Inventor: BRES, Philippe, Luc, Marie, Andre, F-59700 Marcq en Baroeul (FR); CARLIER, Christophe, F-59112 Annoeullin (FR); DAWKINS, Gordon, F-62149 Festubert (FR); FAVEL, Nolwenn, B-1200 Brussels (BE); PETITJEAN, Arnaud, F-59130 Lambersart (FR)
(74) Representative: Rickard, Timothy Mark Adrian
(86) International application number: PCT/GB2005/001390
(87) International publication number: WO 2005/105905

(56) References cited:
- EP-A1- 0 124 656
- EP-A1- 0 612 792
- EP-A1- 0 969 037

## Description

The present invention relates to a process for the preparation of a composition of an expandable styrene polymer in the form of beads.

Expanded polystyrene is a rigid cellular material with a relatively low density, the main uses of which are thermal insulation, in particular of buildings, and the packaging of foodstuffs and manufactured goods. The most noteworthy properties of expanded polystyrene are a low bulk density, which can range from 5 to 100 kg/m³, in particular from 10 to 30 kg/m³, a very low thermal conductivity and good resistance to ageing. The mechanical and thermal properties depend essentially on the bulk density and on the cellular structure, in particular on the size and on the distribution in sizes of the cells and on the thickness of the walls of the cells.

Expanded polystyrene can be obtained from an expandable polystyrene, in particular in the form of beads, a pore-forming agent, such as pentane, being dissolved in the expandable polystyrene. Generally, expandable polystyrene in the form of beads is prepared either in two stages, comprising polymerization of styrene in aqueous suspension followed by impregnation of the polystyrene by a pore-forming agent, or in a single stage, in which the polymerization and the impregnation are carried out simultaneously.

The production of moulded and expanded components made of polystyrene carried out starting from expandable polystyrene generally comprises three stages:
(a) the beads of expandable polystyrene are first expanded by heating, in particular by bringing into contact with steam in a stirred vessel: this is the pre-expansion or prefoaming stage, where the volume of the beads can be multiplied, for example by a factor of 60, and where the desired bulk density of the expanded polystyrene is achieved;
(b) the expanded beads are then stored for a few hours or a few days while exposed to ambient air: this is the stage of stabilization or of maturing of the beads, which makes it possible to achieve an equilibrium between the pressure inside the cells and the ambient pressure;
(c) the expanded and stabilized beads are finally bonded to one another by heating in a mould: this is the moulding stage.

One of the objects of the present invention is to improve the thermal insulation properties of expanded polystyrene at a constant bulk density, without substantially modifying the other properties.

United States Patent US 4 243 717 discloses a composition of expandable polystyrene in the form of beads comprising in particular a Fischer-Tropsch wax. It is actually prepared, according to the examples, by polymerization of styrene in aqueous suspension in the presence of a pair of polymerization initiators, composed of dibenzoyl peroxide (DBP) and tert-butyl perbenzoate (TBP), and of a Fischer-Tropsch wax. The composition exhibits about a dozen improved properties, such as a uniform and stable cellular structure, an increased rate of expansion and a tendency to avoid setting solid during the pre-expansion stage.

However, none of the improved properties relates to one of the major properties of expanded polystyrene, namely the thermal insulation of expanded polystyrene.

European Patent Application EP 0 612 792 discloses a composition of expandable polystyrene in the form of beads comprising in particular a polyethylene wax and the of α-methylstyrene dimer (AMSD). It is actually prepared, according to the examples, by polymerization of styrene in aqueous suspension in the presence of a pair of polymerization initiators, composed of DBP and dicumyl peroxide (DCP), of a polyethylene wax having in particular a number-average molecular mass ranging from 2000 to 6000, and of AMSD. The composition exhibits two improved properties, namely a reduced residual water content and an improved rate of expansion during the pre-expansion stage. However, the thermal insulation, regarded as an essential property of expanded polystyrene, was not described as being improved.

European Patent Application EP 0 969 037 discloses a composition of expandable polystyrene in the form of beads comprising a paraffin wax and optionally a synthetic wax chosen from Fischer-Tropsch waxes and polyolefin waxes, such as polyethylene or polypropylene waxes. It is actually prepared, according to the examples, by polymerization of styrene in aqueous suspension in the presence of a pair of polymerization initiators, composed of DBP, TBP and optionally DCP, of a paraffin wax and optionally of a polyethylene wax. The composition exhibits the sole advantage of increasing the rate of expansion during the pre-expansion stage, without reducing the moulding output in the final stage or affecting the cellular structure of the expanded materials, which implies that the thermal insulation of these materials is not improved.

The present invention relates to a process for the preparation of a composition of an expandable styrene polymer in the form of beads which makes it possible to very substantially improve the thermal insulation of the expanded materials resulting from the composition thus prepared.

More particularly, the present invention relates to a process for the preparation of a composition of an expandable styrene polymer in the form of beads, characterized in that it comprises a polymerization of styrene in aqueous suspension carried out in the presence:
(a) of dibenzoyl peroxide,
(b) of dicumyl peroxide,
(c) of the α-methylstyrene,
(d) of a Fischer-Tropsch wax,
(e) of at least one suspending agent, and
(f) of at least one pore-forming agent.

The composition is preferably a homogeneous composition in the sense that in particular the Fischer-Tropsch wax is dispersed uniformly inside the beads.

It has been found that the combination of the pair of polymerization initiators comprising dibenzoyl peroxide (DBP) and dicumyl peroxide (DCP) with the dimer of α-methylstyrene (AMSD) and a Fischer-Tropsch wax during the polymerization of styrene in aqueous suspension, carried out in the presence of at least one suspending agent and of at least one pore-forming agent, has the effect of forming a homogeneous composition of an expandable styrene polymer in the form of beads which is capable of resulting in expanded materials having markedly improved thermal insulation properties.

The polymerization is carried out in the presence of the following constituents, responsible in particular for the improvement in the thermal insulation properties, which constituents are preferably used in the following amounts (expressed as percentage by weight with respect to the styrene charged to the polymerization):
- dibenzoyl peroxide (DBP), in an amount preferably ranging from 0.05 to 1.0%, in particular from 0.1 to 0.5%,
- dicumyl peroxide (DCP), in an amount preferably ranging from 0.01 to 2.0%, in particular from 0.05 to 1.5%,
- the dimer of α-methylstyrene (AMSD), in an amount preferably ranging from 0.005 to 0.15%, in particular from 0.01 to 0.1%, more particularly from 0.01 to 0.05%, and
- a Fischer-Tropsch wax, in an amount preferably ranging from 0.01 to 1.0%, in particular from 0.05 to 0.5%, more-particularly from 0.05 to 0.25%.

The amount of dicumyl peroxide (DCP) can be relatively low when the polymerization is carried out in the absence of a flame retardant, in particular a chlorinated or brominated flame retardant: in this case, the DCP can be used in an amount ranging from 0.01 to 1.0%, preferably from 0.05 to 0.5%, by weight with respect to the styrene. When the polymerization is carried out in the presence of such a flame retardant, the DCP can then be used in an amount ranging from 0.1 to 2.0%, preferably from 0.1 to 1.5%, by weight with respect to the styrene.

The constituents of the polymerization, peroxides, dimer and wax, as mentioned above, can be introduced into the polymerization in various ways. Thus, the peroxides can be introduced at the beginning of the polymerization or else a portion of the peroxides, such as the DBP and optionally the DCP, can be introduced at the beginning of the polymerization and another portion of the peroxides, such as the DCP, can be introduced subsequently during the polymerization.

The dimer of α-methylstyrene (AMSD) can be introduced at the beginning of or during the polymerization, in particular at the same time as the pore-forming agent.

The Fischer-Tropsch wax can be introduced at the beginning of or during the polymerization, in particular up to a degree of conversion of the styrene to polymer of approximately 50% or, preferably, up to the moment known as being the "particle identity point" (PIP), that is to say the moment during the polymerization at which the beads are formed according to in particular a size which subsequently remains substantially constant up to the end of the polymerization, this moment generally corresponding to a degree of conversion which can range up to 35% or even up to 20%.

The Fischer-Tropsch wax is also a product well known per se which can be easily found commercially, in particular sold by SASOL (South Africa) or by Degussa (Germany). The Fischer-Tropsch wax is essentially composed of n-alkanes, in particular C₂₀ to C₆₀, especially C₂₀ to C₃₉ and preferably C₄₀ to C₆₀ n-alkanes, with a narrow distribution of the molecular masses. Use may be made of "soft" Fischer-Tropsch waxes, having in particular an average molecular mass of approximately 300 to 550, but preference is given to "hard" Fischer-Tropsch waxes, having in particular an average molecular mass of 600 to 850, preferably of 650 to 800 or 650 to 750. The preferred Fischer-Tropsch waxes can exhibit a drop point which, according to the ASTM D 87 standard, can range from 100 to 120°C, preferably from 105 to 115°C. They can also exhibit a needle penetration at 25°C which, according to the ASTM D 1321 standard, can range from 0.2 to 8, preferably from 0.5 to 5 (1/10 mm).

The polymerization is carried out in the presence of at least one pore-forming agent in a proportion by weight, based on the styrene monomer, which can range from 3 to 10%, preferably from 4 to 9%, in particular from 6 to 8%. The pore-forming agent can be chosen from linear or branched alkanes, in particular C₃ to C₇ alkanes, for example n-pentane and isopentane, carbon dioxide and mixtures of two or more of these alkanes and/or of carbon dioxide. The pore-forming agent can be introduced at the beginning of and/or during the polymerization, in one or more portions, instantaneously or continuously over a period of time.

The polymerization is also carried out in the presence of at least one suspending agent chosen in particular from organic suspending agents, such as polyvinyl alcohols, polyvinylpyrrolidones, poly(N-vipylpyrrolidone), hydroxyethylcellulose, carboxymethylcellulose and polyacrylamides, and preferably from inorganic suspending agents, such as tricalcium phosphate, magnesium pyrophosphate, barium phosphate, aluminium phosphate, magnesium oxide, zinc oxide, bentonite, calcium carbonate, calcium fluoride, sodium persulphate and potassium persulphate. The suspending agent is used in particular in a proportion by weight, with respect to the styrene monomer, which can range from 0.0005 to 5%, preferably from 0.05 to 2%.

The polymerization can be carried out in the presence of at least one chain-transfer agent, such as a mercaptan or the dimer of α-methylstyrene, and of at least one branching or crosslinking agent, such as divinylbenzene.

The polymerization can also be carried out in the presence of other additives which confer advantageous properties on the composition of the expandable polystyrene and on the resulting expanded and moulded products. Thus, the polymerization can advantageously be carried out in the presence of at least one flame retardant in a proportion by weight, with respect to the styrene monomer, which can range from 0.05 to 2%, preferably from 0.1 to 1.5%. The flame retardant can be chosen from chlorinated or, preferably, brominated organic compounds, such as hexabromocyclohexane, pentabromomonochlorocyclohexane, hexabromocyclododecane, octa-, nona- and decabromodiphenyl and octa-, nona- and decabromodiphenyl ether. Synergistic agents can be combined with the chlorinated or brominated flame retardants, such as peroxides, in particular dicumyl peroxide.

Other additives, such as antistatic agents, lubricating agents, colorants, antiblocking agents, coating agents, mould-release agents and agents for accelerating the rate of expansion of the beads, such as paraffin waxes, can be introduced at the beginning of, during, at the end of or after the polymerization.

The polymerization is generally carried out at a temperature which can range from 80 to 140°C, according to a temperature profile which increases over time continuously or in successive stationary phases. The polymerization can be halted when the residual content of styrene in the polymer is equal to or less than 2000 parts by weight per million (ppm), preferably equal to or less than 1000 ppm, in particular equal to or less than 800 ppm.

When the polymerization is finished, the composition of expandable styrene polymer in the form of beads is, in a known way, separated from the aqueous phase, washed, dried and optionally coated with additives, such as coating agents. Thus, the composition of expandable styrene polymer is provided in the form of beads which can have a diameter ranging from 0.2 to 4 mm, preferably from 0.4 to 2 mm. Expandable beads are generally subjected to a pre-expansion stage, in particular using steam, so as to form expanded beads having in particular a diameter ranging from 0.1 to 2 cm and a bulk density ranging from 5 to 100 kg/m³, in particular from 10 to 30 kg/m³. The beads, thus expanded, can be subjected to a maturing stage, in particular while exposed to ambient air, for a period of time from a few hours to a few days, and then to a moulding stage, so as to finally form expanded and moulded items.

The present invention exhibits the advantage of providing expanded and moulded items having substantially improved thermal insulation properties at a constant bulk density.

The following examples illustrate the present invention.

### Example 1

The following are introduced into a reactor equipped with stirring, heating and cooling means:
- 100 parts by weight of water,
- 100 parts by weight of styrene,
- 0.29 part by weight of dibenzoyl peroxide (DBP),
- 0.5 part by weight of dicumyl peroxide (DCP),
- 0.025 part by weight of α-methylstyrene dimer (AMSD),
- 0.1 part by weight of a Fischer-Tropsch wax, known under the commercial reference "Vestowax® SH 105 Pulver" and sold by Degussa (Germany),
- 0.64 part by weight of hexabromocyclododecane (HBCD),
- 0.25 part by weight of tricalcium phosphate,
- 0.0005 part by weight of potassium persulphate, and
- 7.75 parts by weight of a 75/25 by weight mixture of n-pentane and isopentane.

The Fischer-Tropsch wax used is a "hard" wax and it is essentially composed of C₄₀ to C₆₀ n-alkanes having an average molecular mass of approximately 700, a drop point (according to the ASTM D 87 standard) of 108 to 114°C and a needle penetration (according to the ASTM D 1321 standard) of 1 mm.10⁻¹.

The mixture thus obtained is heated to 90°C, so as to initiate the polymerization, and is then maintained at this temperature for 300 minutes. The mixture is subsequently heated from 90°C to 120°C over 60 minutes and is then maintained at 120°C until a residual content of styrene in the polymer of 1000 ppm is reached. At the end of this time, the polymerization is halted by cooling the reactor to ambient temperature (20°C). The expandable polystyrene beads are separated from the aqueous phase, washed with water, dried and sieved. They are subjected to a pre-expansion stage by bringing into contact with steam until a desired bulk density of between 14 and 28 g/l is achieved. They are subsequently subjected to a maturing stage while exposed to ambient air and finally moulded in the form of expanded items so as to be able to measure, on these items, the thermal conductivity (λ) according to the draft European Standard prEN 13163T. The results of these measurements are collated in Table 1.

### Example 2 (comparative)

The preparation is carried out exactly as in Example 1, except that AMSD is not introduced into the reactor and that, instead of introducing 0.1 part by weight of the Fischer-Tropsch wax, 0.25 part by weight thereof is introduced.

After moulding, the thermal conductivity (λ) of the moulded and expanded items is measured and the results of these measurements are collated in Table 1.

**Table 1: Relationship between the thermal conductivity (λ), expressed in mW/m.K, as a function of the bulk density (BD), expressed in g/l, of the moulded and expanded items obtained in Example 1 and in Comparative Example 2**

| | Example 1 | Example 2 (comp.) |
|---|---|---|
| BD | λ | λ |
| 28 | 32.0 | 32.9 |
| 23 | 32.8 | 34.0 |
| 17 | 35.3 | 37.0 |
| 15 | 36.4 | 38.5 |
| 14 | 37.0 | 39.5 |

The results of Table 1 show that, at a constant bulk density, the thermal conductivity (λ) of the moulded and expanded items of Example 1 is always substantially less than that of the moulded and expanded items of Comparative Example 2. This shows that the items of Example 1 have thermal insulation properties which are substantially better than those of the items of Comparative Example 2, at a constant bulk density.

## Claims

1. Process for the preparation of a composition of an expandable styrene polymer in the form of beads, **characterized in that** it comprises a polymerization of styrene in aqueous suspension carried out in the presence:
(a) of dibenzoyl peroxide,
(b) of dicumyl peroxide,
(c) of the dimer of α-methylstyrene,
(d) of a Fischer-Tropsch wax,
(e) of at least one suspending agent, and
(f) of at least one pore-forming agent.

2. Process according to Claim 1, **characterized in that** the Fischer-Tropsch wax is essentially composed of C₂₀ to C₆₀, preferably C₄₀ to C₆₀, n-alkanes.

3. Process according to Claim 1 or 2, **characterized in that** the Fischer-Tropsch wax has an average molecular mass of 600 to 850, preferably of 650 to 800.

4. Process according to any one of Claims 1 to 3, **characterized in that** the Fischer-Tropsch wax exhibits a drop point according to the ASTM D 87 standard ranging from 100 to 120°C, preferably from 105 to 115°C.

5. Process according to any one of Claims 1 to 4, **characterized in that** the Fischer-Tropsch wax exhibits a needle penetration at 25°C according to the ASTM D 1321 standard ranging from 0.2 to 8, preferably from 0.5 to 5 (1/10 mm).

6. Process according to any one of Claims 1 to 5, **characterized in that** the Fischer-Tropsch wax is introduced at the beginning of or during the polymerization, preferably up to a degree of conversion of the styrene to polymer of 50%, in particular of 35%, especially of 20%.

7. Process according to any one of Claims 1 to 6, **characterized in that** the dibenzoyl peroxide is in an amount ranging from 0.05 to 1.0%, preferably from 0.1 to 0.5%, by weight with respect to the styrene.

8. Process according to any one of Claims 1 to 7, **characterized in that** the dicumyl peroxide is in an amount ranging from 0.01 to 2.0%, preferably from 0.05 to 1.5%, by weight with respect to the styrene.

9. Process according to any one of Claims 1 to 8, **characterized in that** the dimer of α-methylstyrene is in an amount ranging from 0.005 to 0.15%, preferably from 0.01 to 0.1%, in particular from 0.01 to 0.05%, by weight with respect to the styrene.

10. Process according to any one of Claims 1 to 9, **characterized in that** the Fischer-Tropsch wax is in an amount ranging from 0.01 to 1.0%, preferably from 0.05 to 0.5%, in particular from 0.05 to 0.25%, by weight with respect to the styrene.

11. Process according to any one of Claims 1 to 10, **characterized in that** the pore-forming agent is in an amount ranging from 3 to 10%, preferably from 4 to 9%, by weight with respect to the styrene and is preferably chosen from linear or branched, in particular C₃ to C₇, alkanes, carbon dioxide and mixtures of two or more of these alkanes and/or of carbon dioxide.

12. Process according to any one of Claims 1 to 11, **characterized in that** the suspending agent is in an amount ranging from 0.0005 to 5%, preferably from 0.005 to 2%, by weight with respect to the styrene and is preferably chosen from organic suspending agents and in particular from inorganic suspending agents.

13. Process according to any one of Claims 1 to 12, **characterized in that** the polymerization is additionally carried out in the presence of at least one flame retardant.

14. Process according to Claim 13, **characterized in that** the flame retardant is chosen from chlorinated and preferably brominated organic compounds.

15. Process according to Claim 13 or 14, **characterized in that** the flame retardant is in an amount ranging from 0.05 to 2%, preferably from 0.1 to 1.5%, by weight with respect to the styrene.

## Patentansprüche

1. Verfahren zur Herstellung einer Zusammensetzung eines expandierbaren Styrolpolymers in Form von Perlen, **dadurch gekennzeichnet, dass** es eine Polymerisation von Styrol in einer wässrigen Suspension umfasst, durchgeführt in der Gegenwart von:
(a) Dibenzoylperoxid,
(b) Dicumylperoxid,
(c) dem Dimer von α-Methylstyrol,
(d) einem Fischer-Tropsch Wachs,
(e) mindestens einem Suspendierungsmittel, und
(f) mindestens einem porenbildenden Mittel.

2. Verfahren gemäß Anspruch 1, **dadurch gekennzeichnet, dass** das Fischer-Tropsch Wachs hauptsächlich zusammengesetzt ist aus C₂₀ bis C₆₀, vorzugsweise C₄₀ bis C₆₀, n-Alkanen.

3. Verfahren gemäß Anspruch 1 oder 2, **dadurch gekennzeichnet, dass** das Fischer-Tropsch Wachs ein durchschnittliches Molekulargewicht von 600 bis 850, vorzugsweise von 650 bis 800, besitzt.

4. Verfahren gemäß einem der Ansprüche 1 bis 3, **dadurch gekennzeichnet, dass** das Fischer-Tropsch Wachs einen Tropfpunkt gemäß dem ASTM D 87 Standard im Bereich von 100 bis 120 °C, vorzugsweise von 105 bis 115 °C, aufweist.

5. Verfahren gemäß einem der Ansprüche 1 bis 4, **dadurch gekennzeichnet, dass** das Fischer-Tropsch Wachs eine Nadelpenetration bei 25°C gemäß dem ASTM D 1321 Standard im Bereich von 0,2 bis 8, vorzugsweise von 0,5 bis 5 (1/10 mm), aufweist.

6. Verfahren gemäß einem der Ansprüche 1 bis 5, **dadurch gekennzeichnet, dass** das Fischer-Tropsch Wachs an dem Anfang oder während der Polymerisierung eingeführt wird, vorzugsweise bis zu einem Umwandlungsgrad des Styrols zum Polymer von 50 %, besonders bevorzugt von 35 %, insbesondere von 20 %.

7. Verfahren gemäß einem der Ansprüche 1 bis 6, **dadurch gekennzeichnet, dass** das Dibenzoylperoxid in einer Menge im Bereich von 0,05 bis 1,0 Gew.-%, vorzugsweise von 0,1 bis 0,5 Gew.-%, bezogen auf das Styrol, vorhanden ist.

8. Verfahren gemäß einem der Ansprüche 1 bis 7, **dadurch gekennzeichnet, dass** das Dicumylperoxid in einer Menge im Bereich von 0,01 bis 2,0 Gew.-%, vorzugsweise von 0,05 bis 1,5 Gew.-%, bezogen auf das Styrol, vorhanden ist.

9. Verfahren gemäß einem der Ansprüche 1 bis 8, **dadurch gekennzeichnet, dass** das Dimer von α-Methylstyrol in einer Menge im Bereich von 0,005 bis 0,15 Gew.-%, vorzugsweise von 0,01 bis 0,1 Gew.-%, insbesondere von 0,01 bis 0,05 Gew.-%, bezogen auf das Styrol, vorhanden ist.

10. Verfahren gemäß einem der Ansprüche 1 bis 9, **dadurch gekennzeichnet, dass** das Fischer-Tropsch Wachs in einer Menge im Bereich von 0,01 bis 1,0 Gew.-%, vorzugsweise von 0,05 bis 0,5 Gew.-%, insbesondere von 0,05 bis 0,25 Gew.-%, bezogen auf das Styrol, vorhanden ist.

11. Verfahren gemäß einem der Ansprüche 1 bis 10, **dadurch gekennzeichnet, dass** das porenbildende Mittel in einer Menge im Bereich von 3 bis 10 Gew.-%, vorzugsweise von 4 bis 9 Gew.-%, bezogen auf das Styrol, vorhanden ist und vorzugsweise ausgewählt ist aus linearen oder verzweigten, insbesondere C₃ bis C₇ Alkanen, Kohlendioxid und Gemischen aus zwei oder mehr von diesen Alkanen und/oder Kohlendioxid.

12. Verfahren gemäß einem der Ansprüche 1 bis 11, **dadurch gekennzeichnet, dass** das Suspendierungsmittel in einer Menge im Bereich von 0,0005 bis 5 Gew.-%, vorzugsweise von 0,005 bis 2 Gew.-%, bezogen auf das Styrol, vorhanden ist und vorzugsweise ausgwählt ist aus organischen Suspendierungsmitteln und insbesondere aus anorganischen Suspendierungsmitteln.

13. Verfahren gemäß einem der Ansprüche 1 bis 12, **dadurch gekennzeichnet, dass** die Polymerisation zusätzlich in der Gegenwart von mindestens einem Flammenhemmer ausgeführt wird.

14. Verfahren gemäß Anspruch 13, **dadurch gekennzeichnet, dass** der Flammenhemmer ausgewählt ist aus chlorierten und vorzugsweise bromierten organischen Verbindungen.

15. Verfahren gemäß Anspruch 13 oder 14, **dadurch gekennzeichnet, dass** der Flammenhemmer in einer Menge im Bereich von 0,05 bis 2 Gew.-%, vorzugsweise von 0,1 bis 1,5 Gew.-%, bezogen auf das Styrol, vorhanden ist.

## Revendications

1. Procédé pour la préparation d'une composition d'un polymère de styrène expansible sous la forme de perles, **caractérisé en ce qu'**il comprend la polymérisation de styrène en suspension aqueuse, réalisée en présence :
(a) de peroxyde de dibenzoyle,
(b) de peroxyde de dicumyle,
(c) de dimère d'α-méthylstyrène,
(d) d'une cire de Fischer-Tropsch,
(e) d'au moins un agent de mise en suspension, et
(f) d'au moins un agent porogène.

2. Procédé selon la revendication 1, **caractérisé en ce que** la cire de Fischer-Tropsch est essentiellement composée de n-alcanes en C₂₀ à C_{60,} de préférence en C₄₀ à C_{60.}

3. Procédé selon la revendication 1 ou 2, **caractérisé en ce que** la cire de Fischer-Tropsch a une masse moléculaire moyenne de 600 à 850, de préférence de 650 à 800.

4. Procédé selon l'une quelconque des revendications 1 à 3, **caractérisé en ce que** la cire de Fischer-Tropsch présente un point de goutte, conformément à la norme ASTM D 87, situé dans la plage allant de 100 à 120°C, de préférence de 105 à 115°C.

5. Procédé selon l'une quelconque des revendications 1 à 4, **caractérisé en ce que** la cire de Fischer-Tropsch présente une pénétration d'aiguille à 25°C, conformément à la norme ASTM D 1321, située dans la plage allant de 0,2 à 8, de préférence de 0,5 à 5 (1/10 mm).

6. Procédé selon l'une quelconque des revendications 1 à 5, **caractérisé en ce que** la cire de Fischer-Tropsch est introduite au début de ou durant la polymérisation, de préférence jusqu'à un degré de conversion du styrène en polymère de 50 %, en particulier de 35 %, tout spécialement de 20 %.

7. Procédé selon l'une quelconque des revendications 1 à 6, **caractérisé en ce que** le peroxyde de dibenzoyle est présent en une quantité située dans la plage allant de 0,05 à 1,0 %, de préférence de 0,1 à 0,5 % en poids par rapport au styrène.

8. Procédé selon l'une quelconque des revendications 1 à 7, **caractérisé en ce que** le peroxyde de dicumyle est présent en une quantité située dans la plage allant de 0,01 à 2,0 %, de préférence de 0,05 à 1,5 % en poids par rapport au styrène.

9. Procédé selon l'une quelconque des revendications 1 à 8, **caractérisé en ce que** le dimère d'α-méthylstyrène est présent en une quantité située dans la plage allant de 0,005 à 0,15 %, de préférence de 0,01 à 0,1 %, en particulier de 0,01 à 0,05 % en poids par rapport au styrène.

10. Procédé selon l'une quelconque des revendications 1 à 9, **caractérisé en ce que** la cire de Fischer-Tropsch est présente en une quantité située dans la plage allant de 0,01 à 1,0 %, de préférence de 0,05 à 0,5 %, en particulier de 0,05 à 0,25 % en poids par rapport au styrène.

11. Procédé selon l'une quelconque des revendications 1 à 10 **caractérisé en ce que** l'agent porogène est présent en une quantité située dans la plage allant de 3 à 10 %, de préférence de 4 à 9 % en poids par rapport au styrène, et est de préférence choisi parmi les alcanes linéaires ou ramifiés, en particulier en C₃ à C₇, le dioxyde de carbone, et les mélanges de deux ou plus de ces alcanes et/ou de dioxyde de carbone.

12. Procédé selon l'une quelconque des revendications 1 à 11, **caractérisé en ce que** l'agent de mise en suspension est présent en une quantité située dans la plage allant de 0,0005 à 5 %, de préférence de 0,005 à 2 % en poids par rapport au styrène, et est de préférence choisi parmi les agents de mise en suspension organiques et, en particulier, parmi les agents de mise en suspension inorganiques.

13. Procédé selon l'une quelconque des revendications 1 à 12, **caractérisé en ce que** la polymérisation est de plus réalisée en présence d'au moins un retardateur d'inflammation.

14. Procédé selon la revendication 13, **caractérisé en ce que** le retardateur d'inflammation est choisi parmi les composés organiques chlorés, et de préférence bromés.

15. Procédé selon la revendication 13 ou 14, **caractérisé en ce que** le retardateur d'inflammation est présent en une quantité située dans la plage allant de 0,05 à 2 %, de préférence de 0,1 à 1,5 % en poids par rapport au styrène.
